# EUROPÄISCHE PATENTANMELDUNG

(11) **EP 3 978 202 A1**
(43) Veröffentlichungstag der Anmeldung: **06.04.2022**
(21) Anmeldenummer: 20204569.6
(22) Anmeldetag: 29.10.2020
(51) Int. Cl.: B25J 9/16

(54) **PLANEN EINES TECHNISCHEN PROZESSES AUFWEISEND HIERARCHISCH GEGLIEDERTE AUFGABEN UND PARALLELISIERUNGSOPTIONEN**

(30) Priorität: 05.10.2020 EP 20200014
(71) Anmelder: Siemens Aktiengesellschaft, 80333 München (DE)
(72) Erfinder: Albrecht, Sebastian, 85399 Hallbergmoos (DE); Kast, Bernd, 89335 Ichenhausen (DE); Feiten, Wendelin, 85579 Neubiberg (DE)

(57) **Zusammenfassung**

Die Erfindung gibt ein computerimplementiertes Verfahren zum Planen eines technischen Prozesses (P), wobei der technische Prozess (P) hierarchisch gegliederte Aufgaben (A) aufweist an. Das computerimplementierte Verfahren weist die folgenden Schritte auf:
- Einlesen (S1) von Abhängigkeitsangaben (AA) der hierarchisch gegliederten Aufgaben (A),
- Ableiten (S2) von Parallelisierungsoptionen (PO) aus den Abhängigkeitsangaben (AA),
- Generieren (S3) einer ersten Aktionssequenz (AS1) unter Einbezug der Parallelisierungsoptionen (PO), wobei die erste Aktionssequenz (AS1) die hierarchisch gegliederten Aufgaben (A) umsetzt.

Außerdem gibt die Erfindung ein Computerprogrammprodukt und ein computerlesbares Medium an.

## Beschreibung

### HINTERGRUND DER ERFINDUNG

### Gebiet der Erfindung

Die vorliegende Erfindung betrifft ein computerimplementiertes Verfahren zum Planen eines technischen Prozesses, wobei der technische Prozess hierarchisch gegliederte Aufgaben aufweist. Außerdem gibt die Erfindung ein Computerprogrammprodukt und ein computerlesbares Medium an.

Die Erfindung kann insbesondere zum Planen eines technischen Prozesses aufweisend hierarchisch gegliederte Aufgaben und Parallelisierungsoptionen verwendet werden.

### Beschreibung des Stands der Technik

Die Aufgabe der Erfindung besteht darin, eine Lösung zur Planung von technischen Prozessen, welche hierarchische Aufgaben mit Parallelisierungsoption aufweisen, bereitzustellen.

In einer Vielzahl von Domänen besteht die Möglichkeit mittels autonomen Systemen Aufgaben zu erledigen, die sich heute aufgrund des Ingenieursaufwand nicht wirtschaftlich automatisieren lassen. Das heißt, dass die flexiblen bzw. dynamischen Domänen es erfordern, für immer neue Varianten geeignete Handlungspläne zu erstellen und diese dann adäquat auszuführen. Für eine fixe Variante, die häufig wiederholt wird, insbesondere in der Massenfertigung, rechnen sich gegebenenfalls die Kosten des manuellen Designs, jedoch lässt die benötigte Flexibilität die Strategie unwirtschaftlich werden.

Ein wesentlicher Fokus liegt auf der Automatisierung von Aufgaben, die wesentlich auf der parallelen Durchführung von Prozessen beruht.

Bevorzugt seien dazu die folgenden Domänen erwähnt:
- Logistik und Intralogistik: Mehrere Komponenten können Güter innerhalb einer Fabrik oder zwischen Produktionsstätten bewegen und dort können weitere Produktionsschritte mit diesen Gütern durchgeführt werden. Hier kann die Autonomität darin bestehen, die einzelnen mobilen Fahrzeuge (AGVs) zentral oder dezentral zu koordinieren. Zudem kann dies auch als Teilproblem der gesamten Fabrikkoordinierung betrachtet werden, wodurch dann der gesamte Fertigungsprozess autonom gesteuert werden könnte. Man kann damit leicht neue Produktionsaufgaben einpflegen, die Anzahl der AGVs variieren oder auf veränderliche KPIs reagieren.
- Straßenverkehr: Mehrere Fahrzeuge und zum Teil auch die stationäre Infrastruktur haben eine Reihe an Sensoren und zum Teil können die Fahrzeuge auch autonom oder teilautonom fahren. Es stellt sich dort unter anderem die Frage, welche Sensoren man wie miteinander kombiniert, um für die Bewegungsplanung oder die Steuerung der Infrastruktur hinreichend genaue Daten mittels Sensorfusion zu erzeugen.
- Personenverkehr: Welche Kombinationen an ÖPNV-Komponenten sind wie zu wählen, um angeforderte Transportaufgaben dynamisch zu erfüllen? Wie sieht der optimale Fahrplan aus? Wie ist auf Staus und Verzögerungen beispielsweise im Bahnverkehr zu reagieren?
- Prozessindustrie: Mehrere kontinuierliche Produktionsprozesse erfordern die abgestimmte Steuerung von Pumpen sowie von Maschinen zum Mischen, Erhitzen oder Abkühlen als auch von Reinigungsschritten. Aufgrund der komplexen Vorgänge in jeder der Komponenten lassen sich Abläufe nur nach detaillierter Simulation und Tests dauerhaft anpassen. Somit stellt sich die Frage, welche Simulationen und Test die benötigten Informationen liefern und welche Steuerungen die KPIs minimieren. Da beides zeitaufwändig und kostenintensiv ist, muss man diese Schritte aufeinander abstimmen und möglichst viel parallelisieren.
- Perzeption: In der Bildverarbeitung gibt es eine Vielzahl an Algorithmen, die rechenintensiv sind und erst in einer aufgabenabhängigen Verkettung nutzbare Resultate liefern. Hier werden deshalb alle Vorzüge moderner Rechnerarchitekturen ausgenutzt, um möglichst viel zu parallelisieren.

All die genannten Anwendungsdomänen eint, dass eine Vielzahl von Prozessen aufeinander abgestimmt werden müssen und diese stark parallel gesteuert werden müssen. Damit ist Autonomität in diesen Domänen nur möglich, wenn die Parallelitätsaspekte schon während der Planerstellung und/oder der Planung berücksichtigt werden und während der Ausführung maximal ausgenutzt werden.

Ein technische Problem im Stand der Technik ist somit, automatisch aus einer Vielzahl von möglichen Elementen für eine parallel ablaufende Lösung eines gegebenen Problems die geeigneten Elemente auszuwählen, in einem Netzwerk von mehreren parallel laufenden Sequenzen zu strukturieren und mit geeigneten Parametern auf die Aufgabe einzustellen.

Zwei Ansätze sind bekannt mit denen sich Spezialfälle lösen lassen. Wie im vorangegangen dargelegt, liegt die Herausforderung vor allem in der Kombination von Problemgröße und notwendigen Parallelitäten in der Ausführung mit Flexibilität in der Aufgabenstellung.

In einem ersten Ansatz, gegeben, dass nur eine eingeschränkte Flexibilität benötigt wird und der benötigte Wertebereich für diese flexiblen Komponenten schon wären der Designphase vollkommen bekannt ist, lässt sich das Vorgehen klassisch manuell erstellen. Dazu werden die Abhängigkeiten des Ablaufes von den flexiblen Komponenten handcodiert. Sowie explizit in dem Designprozess entwickelt, welche Prozesse während der Ausführung parallel ablaufen. Dieser manuelle Designprozess kann beispielweise State Machines, Behavior Trees, oder HTN-Komponenten umfassen.

In einem zweiten Ansatz lassen sich sehr kleine Aufgaben in speziellen homogenen Domänen (d.h. idealerweise rein symbolische Aufgaben (auch als Scheduling bekannt) oder rein kontinuierliche Aufgaben (auch als Pfadplanung bekannt)) mit Spezialplanern lösen. Das Resultat des Planers kann Parallelitäten beinhalten (insbesondere in Form eines Petrinetzes angegeben werden), welche dann mit entsprechenden Ausführungskomponenten ausgenutzt werden können.

Daraus ergibt sich die Aufgabe der Erfindung eine verbesserte Lösung zur Planung von voneinander abhängigen technischen Aufgaben und technischen Prozessen anzugeben.

### ZUSAMMENFASSUNG DER ERFINDUNG

Die Erfindung ergibt sich aus den Merkmalen der unabhängigen Ansprüche. Vorteilhafte Weiterbildungen und Ausgestaltungen sind Gegenstand der abhängigen Ansprüche. Ausgestaltungen, Anwendungsmöglichkeiten und Vorteile der Erfindung ergeben sich aus der nachfolgenden Beschreibung und den Zeichnungen.

Die Erfindung betrifft ein computerimplementiertes Verfahren zum Planen eines technischen Prozesses, wobei der technische Prozess hierarchisch gegliederte Aufgaben aufweist. Das computerimplementiertes Verfahren weist die folgenden Schritte auf:
- Einlesen von Abhängigkeitsangaben der hierarchisch gegliederten Aufgaben,
- Ableiten von Parallelisierungsoptionen aus den Abhängigkeitsangaben und
- Generieren einer ersten Aktionssequenz unter Einbezug der Parallelisierungsoptionen, wobei die erste Aktionssequenz die hierarchisch gegliederten Aufgaben umsetzt.

Hierarchisch gegliederten Aufgaben im Sinne dieser Erfindung sind Aufgaben, welche in unterschiedliche hierarchische Level gegliedert sind. Ein oberes hierarchisches Level kann eine Aufgabe aufweisen, welche durch weitere Aufgaben des darunterliegenden hierarchischen Levels näher spezifiziert wird.

Insbesondere weisen die hierarchisch gegliederten Aufgaben je eine Hierarchieangabe auf, wobei die je eine Hierarchieangabe ein hierarchisches Level innerhalb des Prozesses derart bestimmt, dass eine erste Aufgabe eines ersten hierarchischen Levels durch weitere Aufgaben (oder mindestens eine zweite Aufgabe)eines zweiten hierarchischen Levels weiter detailliert wird, wobei die erste Aufgabe und die mindestens eine zweite Aufgabe/die weiteren Aufgaben Teil der hierarchisch gegliederten Aufgaben sind. Insbesondere kann ein erstes hierarchisches Level durch die ersten Aufgaben "Planen, Durchführen, Kontrollieren, Reagieren" bestimmt sein. Auf einem zweiten hierarchischen Level kann die erste Aufgabe "Kontrollieren" auf einem zweiten hierarchischen Level (die mindestens eine zweite oder) die weiteren Aufgaben "Messen von Istwerten, Abrufen von Sollwerten, Vergleichen von Ist- und Sollwerten, Berechnen von Abweichungen" bestimmt sein.

Abhängigkeitsangaben von Aufgaben im Sinne dieser Erfindung sind Angaben welche Abhängigkeiten zwischen den genannten hierarchischen Aufgaben angeben. Die Abhängigkeiten können dabei insbesondere kausal und/oder temporal sein.

Die kausalen Abhängigkeiten geben Angaben zu kausalen Abhängigkeiten des technischen Prozesses, insbesondere Abhängigkeiten durch Aktionen, welche erst dann durchgeführt werden können, sobald vorhergehende (direkt oder indirekt vorangegangene) Aktionen abgeschlossen und deren Ergebnisse vorhanden sind, insbesondere Lackieren nach Formen. Insbesondere kann eine Aktion auch von einer Vielzahl von vorangegangen (parallelen oder sukzessiven) Aktionen abhängen. Die temporalen Informationen geben Angaben zu temporalen Abhängigkeiten des technischen Prozesses, insbesondere Bearbeitungszeiten, Wartezeiten, Lieferzeiten, Arbeitszeiten und Ruhezeiten.

Parallelisierungsoptionen von Aufgaben im Sinne dieser Erfindung sind insbesondere Optionen zur möglichen parallelen Durchführung der hierarchisch gegliederten Aufgaben. So können insbesondere Optionen zur Parallelisierung von Aufgaben desselben hierarchischen Levels gegeben sein.

Die erste Aktionssequenz im Sinne dieser Erfindung ist eine Sequenz von Aktionen, wobei die Aktionen die hierarchisch gegliederten Aufgaben umsetzt. Die Sequenz kann aufeinanderfolgenden und/oder parallele Aktionen enthalten. Eine hierarchische Aufgabe kann eine Reinigung einer Maschine definieren, die zugehörigen Aktionen "Abstrahlen", "Bürsten" und "Waschen" und "Trocknen" sein.

Ein Aspekt der Erfindung besteht darin einen technischen Prozess aufweisend hierarchisch gegliederter Aufgaben zu planen und dabei Parallelisierungsoptionen der hierarchisch gegliederten Aufgaben zu berücksichtigen.

Bei dem Einlesen von Abhängigkeitsangaben der hierarchisch gegliederten Aufgaben erstellt ein hierarchischer Planer sukzessive Aktionssequenzen, welche auch als Teilpläne bezeichenbar sind, mit schrittweise zunehmendem Detailgrad auf der Grundlage von hierarchischen Modellen für das deklarative und prozedurale Wissen über alle in dem technischen Prozess relevanten Elemente und Prozesse. Dazu werden geeignete Aktionssequenzen des technischen Prozesses an Spezialplanungskomponenten übergeben.

Jeder Schritt in dem so erhaltenen Teilplan wird dann als neue hierarchische Aufgabe auf einem detaillierteren Level formuliert, solange bis alle im Plan enthaltenen Prozesse für die Aufgabe genügend detailliert sind.

Im Unterschied zu der sequenziellen Planung muss der hierarchische Planer nicht nur die relevanten Instanzen von Modellen für die Teilplaner zur Verfügung stellen, sondern auch deren temporale Information. Das heißt, wann wurde eine bestimmte Instanz erstellt bzw. in welchen Zeiträumen sind welche Komponenten belegt? Dies ist zwingend erforderlich, um die Effekte einer Parallelisierung während der Planung zu berücksichtigen.

Beim Ableiten von Parallelisierungsoptionen aus den Abhängigkeitsangaben erhält eine Parallelisierungskomponente vom hierarchischen Planer Pläne, die Parallelitäten enthalten bzw. ermöglichen, und realisiert die parallele Ausführung auf Hardware. D.h. entsprechend dem Plan werden mehrere Prozesse gleichzeitig gestartet.

Nach dem Generieren der ersten Aktionssequenz unter Einbezug der Parallelisierungsoptionen liefert der hierarchische Planer, welcher auch alsPlanungskomponente bezeichenbar ist,) eine erste Aktionssequenz an die Parallelisierungskomponente, d.h. eine partiell-geordnete Menge an Aktionen - diese Ordnung gibt zunächst nur die kausalen und nicht explizit die temporalen Abhängigkeiten an. Je zwei Aktionen in diesem Plan, zwischen deren Ressourcenbedarf weder explizit, das heißt insbesondere über eine direkte Angabe der Ordnungsrelation zwischen den Aktionen, noch implizit, d.h. insbesondere über eine Kette anderer Ordnungsrelationen, eine Relation angegeben ist, sind Kandidaten für eine parallele Ausführung.

Ein Lock ist eine temporale Einschränkung zwischen Aktionen im Plan, die der kausalen Ordnungsrelation des Plans entspringt, wo Resultate von zwei unterschiedlichen vorangegangenen Aktionen als Eingangsgrößen benötigt werden, d.h. die beiden zeitgleich Ergebnisse vorliegen, damit letztere Aktion gestartet werden kann. Die Parallelisierungskomponente identifiziert derartige Locks und bestimmt mit diesen die Stränge an Aktionen, die parallel ausgeführt werden können.

Sobald alle Eingangsgrößen für einen Strang vorliegen, kann dieser unabhängig von den anderen laufenden Prozessen gestartet werden.

In einer weiteren Weiterbildung der Erfindung weist das Verfahren die weiteren Verfahrensschritte auf:
- Empfangen von Prozessdaten, wobei die Prozessdaten einen Istzustand des technischen Prozesses umfassen, und
- Generieren einer zweiten Aktionssequenz anhand der Prozessdaten, wobei die zweite Aktionssequenz die hierarchisch gegliederten Aufgaben umsetzt.

Sollten sich wesentliche Abweichungen von Ergebnissen der ersten Aktionssequenz ergeben, meldet die Parallelisierungskomponente dies an den hierarchischen Planer zurück, so dass dort eine Planänderung, d.h. die zweite Aktionssequenz erstellt werden kann.

Zu dieser parallelen Ausführung gehört zwangsweise eine Überwachungskomponente, die überprüft, dass alle Aktionen einer Aktionssequenz die während der Planung berechneten Bedingungen, auch als Sollzustand bezeichenbar, erfüllen.

Sowohl im Fall signifikanter Abweichungen, insbesondere dadurch verursacht, dass die Resultate der ersten Aktionssequenz außerhalb des erwarteten Wertebereichs liegen, oder im Fehlerfall, insbesondere dadurch verursacht, dass sich die erste Aktionssequenz sich nicht erfolgreich beenden ließ, liefert die Überwachungskomponente entsprechende Informationen an die Planungskomponente, so dass ein neuer Plan, d.h. im Wortlaut der Erfindung eine zweite Aktionssequenz erstellt werden kann. Insbesondere wird der Planungskomponente mitgeteilt, welche Aktion mit welchen Ein- und Ausgangswerten zu einem Abbruch der Ausführung geführt hat. Je nach Rückmeldung kann die Planungskomponente entscheiden, ob Neuplanung oder Fortführung der Planung zu wählen ist. Von dort beginnt das Vorgehen dann von vorne.

In einer Weiterbildung der Erfindung ersetzt die zweite Aktionssequenz die erste Aktionssequenz. Das hat den Vorteil, dass eine Neuplanung des technischen Prozesses stattfindet.

In einer Weiterbildung der Erfindung folgt die zweite Aktionssequenz der erste Aktionssequenz zeitlich. Das hat den Vorteil, dass eine adaptierte Fortführung des technischen Prozesses stattfindet. So können Abweichungen und Fehler korrigiert werden.

In einer Weiterbildung der Erfindung stoppt die zweite Aktionssequenz den technischen Prozess. Das hat den Vorteil, dass keine Aktionssequenz mehr ausgeführt wird und eine Unterbrechung des technischen Prozesses stattfindet.

In einer Weiterbildung der Erfindung ist der technische Prozess als:
- ein Produktionsprozess und/oder
- ein Fertigungsprozess und/oder
- ein Designprozess und/oder
- ein Logistikprozess und/oder
- ein Verkehrsleitprozess und/oder
- ein Transportprozess und/oder
- ein Planungsprozess und/oder
- ein Simulationsprozess und/oder
- ein Perzeptionsprozess
   ausgebildet.

In einer Weiterbildung der Erfindung spezifizieren die Abhängigkeitsangaben die hierarchisch gegliederten Aufgaben hinsichtlich:
- prozessualer Abfolge und/oder
- kausaler Abhängigkeiten und/oder
- Interaktionsbeziehungen und/oder
- temporaler Informationen und/oder
- benötigter Ressourcen und/oder
- obligatorisch zeitgleich verlaufender Aufgaben und/oder
- benötigter Werkzeuge.

Die prozessuale Abfolge gibt Angaben zu prozessbedingten Abhängigkeiten des technischen Prozesses.

Die kausalen Abhängigkeiten geben Angaben zu kausalen Abhängigkeiten des technischen Prozesses, insbesondere Abhängigkeiten durch Aktionen, welche erst dann durchgeführt werden können, sobald vorhergehende, insbesondere direkt oder indirekt vorangegangene Aktionen abgeschlossen und deren Ergebnisse vorhanden sind, insbesondere Lackieren nach Formen. Insbesondere kann eine Aktion auch von einer Vielzahl von vorangegangen, insbesondere parallelen oder sukzessiven Aktionen abhängen.

Die Interaktionsbeziehungen geben Angaben zu interaktionsbedingten Abhängigkeiten des technischen Prozesses, insbesondere wenn ausführende Komponenten von Aktionen miteinander kombiniert Aktionen durchführen müssen, insbesondere Halteroboterarm als eine erste Komponente und Bearbeitungsroboterarm als eine zweite Komponente.

Die temporalen Informationen geben Angaben zu temporalen Abhängigkeiten des technischen Prozesses, insbesondere Bearbeitungszeiten, Wartezeiten, Lieferzeiten, Arbeitszeiten und Ruhezeiten.

Die benötigten Ressourcen geben Angaben zu benötigten Ressourcen des technischen Prozesses, insbesondere Material, Werkstoffe, Güter, finanzielle Mittel, Arbeitskraft, Raum und Umgebungsbedingungen, insbesondere Temperatur, Druck, Feuchtigkeit.

Die obligatorisch zeitgleich verlaufenden Aufgaben geben Angaben zu obligatorisch zeitgleich verlaufenden Aufgaben des technischen Prozesses, insbesondere Aufgaben mit sich ergänzenden Funktionen, insbesondere Reinigung und Wasserzufuhr.

Die benötigten Werkzeuge geben Angaben zu benötigten Werkzeugen des technischen Prozesses, insbesondere Angaben zu gleichzeitig/parallel benötigten Werkzeugen, erwarteten Werkzeugverschleiß, Platzbedarf von Werkzeugen, Bereitstellungsdauer von Werkzeugen,Anwendungsbedingungen und/oder Anwendungsressourcen von Werkzeugen.

In einer Weiterbildung der Erfindung geben die Abhängigkeitsangaben Abhängigkeiten, welche bei einer Ausführung der hierarchisch gegliederten Aufgaben auftreten an. Insbesondere sein hierbei auf die zuvor genannten Abhängigkeiten verwiesen.

In einer Weiterbildung der Erfindung weisen die hierarchisch gegliederten Aufgaben je eine Hierarchieangabe auf, wobei die je eine Hierarchieangabe ein hierarchisches Level innerhalb des Prozesses derart bestimmt, dass eine erste Aufgabe eines ersten hierarchischen Levels durch weitere Aufgaben, im Wortlaut der Erfindung durch die mindestens eine zweite Aufgabeeines zweiten hierarchischen Levels weiter detailliert werden/wird, wobei die erste Aufgabe und die mindestens eine zweite Aufgabe/die weiteren Aufgaben Teil der hierarchisch gegliederten Aufgaben ist/sind. Insbesondere kann ein erstes hierarchisches Level durch die ersten Aufgaben "Planen, Durchführen, Kontrollieren, Reagieren" bestimmt sein. Auf einem zweiten hierarchischen Level kann die erste Aufgabe "Kontrollieren" auf einem zweiten hierarchischen Level die mindestens eine zweite Aufgabe oder die weiteren Aufgaben "Messen von Istwerten, Abrufen von Sollwerten, Vergleichen von Ist- und Sollwerten, Berechnen von Abweichungen" bestimmt sein.

In einer Weiterbildung der Erfindung weist das Verfahren die weiteren Verfahrensschritte auf:
- Empfangen einer Benutzereingabe und
- Generieren einer dritten Aktionssequenz anhand der Benutzereingabe.

Optional ist eine Interaktion mit dem Menschen, insbesondere eine Benutzereingabe, und eine Adaption der Aktionssequenzen möglich. Das ist insbesondere bei der Inbetriebnahme und einer Teilautomatisierung sinnvoll. Hier ermöglichen die hierarchischen Modelle eine graphische Darstellung der Daten und Prozesse entsprechend der jeweiligen Nutzerrolle.

Ein derartig teilautomatisierter Betrieb ermöglicht es auf nicht modellierte Erfahrungen von Personen zurückzugreifen, die mit den Abläufen vertraut sind. Die Hierarchie der Aufgaben erlaubt es hierbei, sich jeweils auf die relevanten Aspekte zu konzentrieren. So kann eine Interaktionskomponente darin bestehen, aus einer Menge an vergleichbaren Plänen einen Favoriten zu wählen, zusätzliche temporale Locks zu spezifizieren bzw. Stränge zu kombinieren oder Rückmeldungen, um Attribute zu ergänzen bzw. das Level für die Weiterplanung anzugeben.

In einer Weiterbildung der Erfindung ersetzt die dritte Aktionssequenz die erste Aktionssequenz und/oder die zweite Aktionssequenz oder folgt die dritte Aktionssequenz der erste Aktionssequenz und/oder die zweite Aktionssequenz zeitlich oder stoppt die dritte Aktionssequenz den technischen Prozess. Das hat den Vorteil, dass eine Neuplanung des technischen Prozesses stattfindet, Abweichungen und Fehler korrigiert werden können und dass keine Aktionssequenz mehr ausgeführt wird und eine Unterbrechung des technischen Prozesses stattfindet.

In einer Weiterbildung der Erfindung stellen die Parallelisierungsoptionen Angaben zu einer temporalen Parallelisierung der hierarchisch gegliederten Aufgaben bereit.

Die Erfindung umfasst außerdem ein Computerprogrammprodukt, umfassend ein Computerprogramm, wobei das Computerprogramm in eine Speichereinrichtung einer Recheneinheit ladbar ist, wobei mit dem Computerprogramm die Schritte eines erfindungsgemäßen Verfahrens ausgeführt werden, wenn das Computerprogramm auf der Recheneinheit ausgeführt wird.

Die Erfindung umfasst außerdem ein computerlesbares Medium, auf welchem ein Computerprogramm gespeichert ist, wobei das Computerprogramm in eine Speichereinrichtung einer Recheneinheit ladbar ist, wobei mit dem Computerprogramm die Schritte eines erfindungsgemäßen Verfahrens ausgeführt werden, wenn das Computerprogramm auf der Recheneinheit ausgeführt wird.

Eine manuelle Erstellung von Aktionssequenzen ist zeitaufwendig, starr und fehleranfällig. Die Kombination von Flexibilisierung bzw. Modifikation bei parallelen Prozessen vervielfacht diese Problematik weiter. Die Erfindung reduziert den Zeitaufwand enorm, da nur eine einmalige Modellierung notwendig ist. Die Planungskomponente schafft dann die Flexibilität sowie stellt sicher, dass in Verbindung mit der Überwachungseinheit eine Vielzahl an Fehlern ausgeschlossen werden kann. Zentral ist hierbei die Verwendung von Hierarchie in der Modellierung, um damit eine Hierarchie an handhabbaren Planungsaufgaben zu erhalten.

Die alternativen Ansätze sind im Allgemeinen nicht anwendbar, da entweder die Komplexität des Problems zu groß ist oder das Problem ohne Parallelisierung nicht lösbar ist.

Die Berücksichtigung der Parallelisierung schon in der Planung ermöglicht es die Strategien sehr detailliert an der vorhandenen Hardware auszurichten. So ist es zum Beispiel möglich einfließen zu lassen, wie viele Kerne die CPU hat oder wie viele AGVs zur Verfügung stehen. Zusätzlich sind auch detailliere Abhängigkeiten berücksichtigbar, insbesondere welche Roboter sich einen Arbeitsraum teilen, d.h. die hierarchische Planung ermöglicht es auch hierarchisch die für die Parallelisierung relevanten Aspekte anzugeben: von diskret oder symbolisch bis kontinuierlich oder sub-symbolisch. Die Komplexität des Einhaltens mehrerer dieser Abhängigkeiten ist ein wesentlicher Vorteil des hierarchischen Ansatzes.

Die Erfindung bietet den weiteren Vorteil einer Ermöglichung einer Interaktion mehrerer Komponenten zur Sicherstellung einer flexiblen, fehlerfreien und parallelen Ausführung in großen, heterogen Domänen. Hierbei werden Modelle, Teilpläne und gegebenenfalls Fehlerzustände ausgetauscht.

Die vollautomatisierte Berechnung der Pläne und deren paralleler Ausführung führt zu einer Regelung von Hardware in der echten Welt. Durch die Interaktion der Ausführung mit der hierarchischen Planung mittels Abweichungen und Fehlern entsteht ein adaptives Verfahren, das auf äußere Einflüsse reagiert. Damit ändern Sensormessungen zur Ausführung das Verhalten des autonomen Systems.

Die hierarchische Planung von parallelen Prozessen ist in einer Vielzahl von Industrieanwendungen relevant. Über all dort, wo Aspekte von autonomen Systemen und Industrie 4.0 Potential haben, lassen die sich durch formale Modelle und Planung adressieren. Die mit dem Stand der Technik genannten Beispiele geben einen Eindruck von Anwendungsgebieten. Diese reichen von Advanced MES über Simulationstools wie Process Simulate und Co-Simulation bis hin zu Verkehrsleitsystemen.

Die Erfindung beinhaltet folgende Schlüsselalgorithmen:
- Hierarchische Planungskomponente für Parallelität: Die bisherige hierarchische Planungskomponente hat zeitliche Informationen während der Planerstellung nicht erhoben und einen sequenziellen Plan erstellt. Die Erweiterung des hierarchischen Ansatzes auf Scheduling, bei dem die temporalen Verfügbarkeiten von Instanzen essenziell ist und damit die bevorzugte Auswahl von Plänen mit hohem Parallelisierungsanteil folgt, ist ein zentraler Aspekt dieser Erfindung.
- Parallelisierungseinheit: Das Analysieren von Plänen und Identifizieren von Strängen ist unentbehrlich für die parallele Steuerung. Diese Komponente ist in der sequenziellen hierarchischen Planung nicht vorhanden. In anderen Domänen, insbesondere Petrinetze, werden ähnliche Aufgabenstellungen betrachtet.
- Ausführung und Rückmeldung: Das parallele Ausführen beruht auf dem koordinierten Starten von mehreren Prozessen und späteren Synchronisieren. Derartige Algorithmen sind in einer Vielzahl von Anwendung bekannt. Ein spezifischer Aspekt in dieser Erfindung ist, dass mithilfe von Rückmeldungen bei Abweichungen und Fehlern die Steuerung adaptiert wird. Dazu muss die Rückmeldung detaillierte Informationen erhalten, die es ermöglichen genau zu rekonstruieren, welcher Prozess mit welchen Eingangsdaten diese Rückmeldung verursacht hat. Zudem kann es notwendig werden, dass weitere parallele Prozesse abhängig von diesen Detailinformationen beendet werden oder zumindest keine neuen Prozesse auf parallelen Strängen gestartet werden.
- Planadaption nach Rückmeldung: Essenziell bei der Planadaption ist es die Informationen der Ausführung einfließen zu lassen, um zu verhindern, dass das Problem wieder auftritt. Das heißt ein einfacher Neustart der Planung löst nicht das Problem. Der Backtracking-Ansatz in der hierarchischen Planung ermöglich es, geeignet auf derartige Informationen zu reagieren. D.h. hier wird sukzessive nach der geeigneten Abstraktionsstufe gesucht, bei der es Alternativpläne gibt, die ohne den fehlgeschlagenen Prozess zum Ziel führen können. Ausgehend von dem Alternativplan wird dann vorgegangen wie bei der nominalen hierarchischen Planung für parallele Prozesse.

### KURZE BESCHREIBUNG DER ZEICHNUNGEN

Die Besonderheiten und Vorteile der Erfindung werden aus den nachfolgenden Erläuterungen mehrerer Ausführungsbeispiele anhand der schematischen Zeichnungen ersichtlich.

Es zeigen
- Fig. 1: ein Ablaufdiagramm des erfindungsgemäßen Verfahrens,
- Fig. 2: ein Ablaufdiagramm des Generierens von Aktionssequenzen und
- Fig. 3: Hierarchieangaben.

### DETAILLIERTE BESCHREIBUNG DER ERFINDUNG

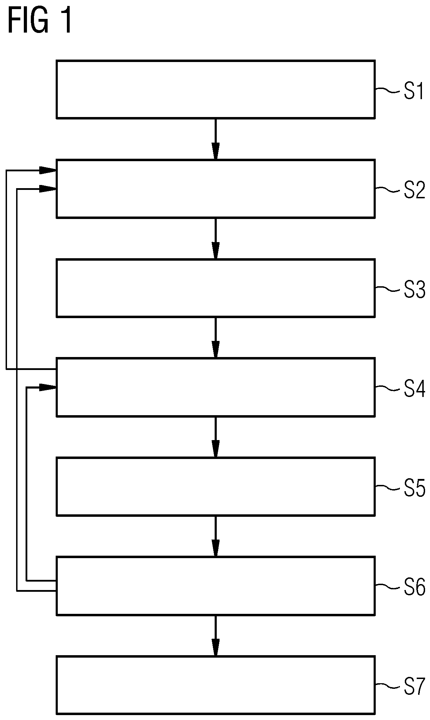

Fig. 1 zeigt ein Ablaufdiagramm des erfindungsgemäßen Verfahrens zum Planen eines technischen Prozesses, wobei der technische Prozess hierarchisch gegliederte Aufgaben aufweist, mit den Schritten:
- Schritt S1: Einlesen von Abhängigkeitsangaben der hierarchisch gegliederten Aufgaben,
- Schritt S2: Ableiten von Parallelisierungsoptionen aus den Abhängigkeitsangaben,
- Schritt S3: Generieren einer ersten Aktionssequenz unter Einbezug der Parallelisierungsoptionen, wobei die erste Aktionssequenz die hierarchisch gegliederten Aufgaben umsetzt,
- Schritt S4: Empfangen von Prozessdaten, wobei die Prozessdaten einen Istzustand des technischen Prozesses umfassen,
- Schritt S5: Generieren einer zweiten Aktionssequenz anhand der Prozessdaten, wobei die zweite Aktionssequenz die hierarchisch gegliederten Aufgaben umsetzt,
- Schritt S6: Empfangen einer Benutzereingabe und
- Schritt S7: Generieren einer dritten Aktionssequenz anhand der Benutzereingabe.

Das Ablaufdiagramm ist dabei nicht als strikt sequenziell zu betrachten. Schritte S1 bis S6 können ebenso in anderen Reihenfolgen durchgeführt werden. Insbesondere ist auch eine Wiederholung bereits durchgeführter Schritte möglich, wenn Input von Sensoren, insbesondere Prozessdaten (Schritt S4) oder Input eines Nutzers (Schritt S6) empfangen wird. Input von Sensoren, insbesondere Prozessdaten (Schritt S4) oder Input eines Nutzers (Schritt S6) kann insbesondere zu Änderungen in der Planungs- bzw. Parallelisierungsaufgabe führen.

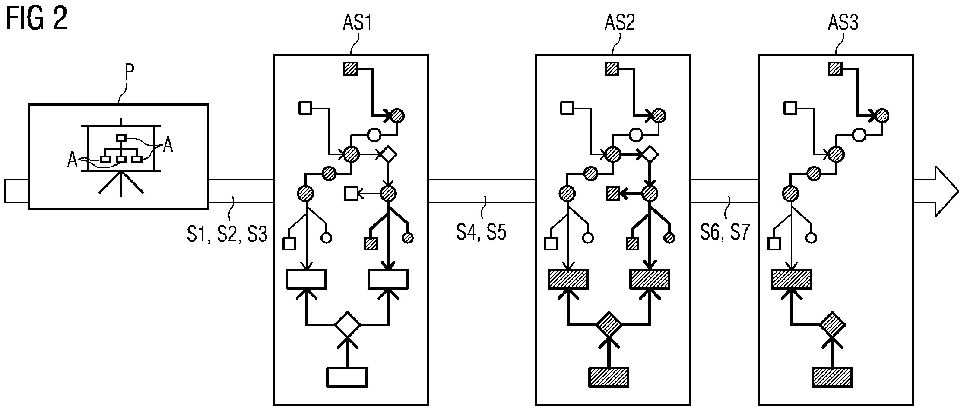

Fig. 2 zeigt ein Ablaufdiagramm des Generierens von Aktionssequenzen eines technischen Prozesses P, wobei der technische Prozess hierarchisch gegliederte Aufgaben A aufweist. Die hierarchisch gegliederten Aufgaben A werden eingelesen und durch Schritt S1, Schritt S2 und Schritt S3 (siehe Fig. 1) eine erste Aktionssequenz AS1 generiert. Anschließend wird durch Schritt S4 und Schritt S5 (siehe Fig. 1) eine zweite Aktionssequenz AS2 generiert. Durch Schritte S6 und S7 kann jederzeit eine dritte Aktionssequenz AS3 generiert werden.
Die zweite Aktionssequenz AS2 kann dabei die erste Aktionssequenz AS1 ersetzen ergänzen und/oder Alternativen bereitstellen. Selbes gilt für die dritte Aktionssequenz AS3 gegenüber der zweiten Aktionssequenz AS2.

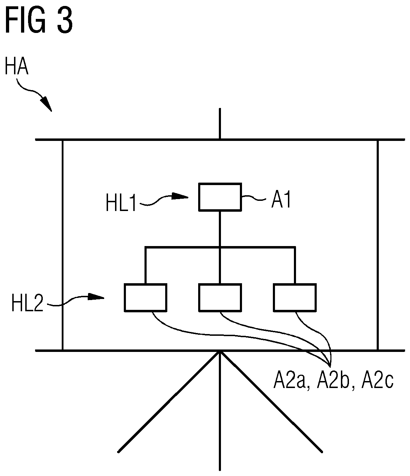

Fig. 3 zeigt Hierarchieangaben HA von hierarchisch gegliederten Aufgaben A1, A2, wobei die je eine Hierarchieangabe HA ein hierarchisches Level innerhalb des Prozesses derart bestimmt, dass eine erste Aufgabe A1 eines ersten hierarchischen Levels HL1 durch mehrere zweite Aufgaben A2a, ..., A2c (in Fig. 3 durch drei zweite Aufgaben) auf dem zweiten hierarchischen Level HL2 weiter detailliert wird, wobei die erste Aufgabe A1 und die zweiten Aufgabe A2 Teil der hierarchisch gegliederten Aufgaben A sind und die Planung dann feststellt, welche der Aufgaben im zweiten hierarchischen Levels wie zu kombinieren sind, um das Ziel der abstrakteren Aufgabe A1 zu erreichen.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

### Bezugszeichenliste

- A: hierarchisch gegliederte Aufgabe
- AS1: erste Aktionssequenz
- AS2: zweite Aktionssequenz
- AS3: dritte Aktionssequenz
- A1: erste Aufgabe
- A2a,b,c: mindestens eine zweite Aufgabe
- HA: Hierarchieangabe
- HL1: erstes hierarchisches Level
- HL2: zweites hierarchisches Level
- Si: Schritt i, i = [1; 7]
- P: technischer Prozess

## Patentansprüche

1. Computerimplementiertes Verfahren zum Planen eines technischen Prozesses (P), wobei der technische Prozess (P) hierarchisch gegliederte Aufgaben (A) aufweist,
mit den Schritten:
- Einlesen (S1) von Abhängigkeitsangaben der hierarchisch gegliederten Aufgaben (A),
- Ableiten (S2) von Parallelisierungsoptionen aus den Abhängigkeitsangaben,
- Generieren (S3) einer ersten Aktionssequenz (AS1) unter Einbezug der Parallelisierungsoptionen, wobei die erste Aktionssequenz (AS1) die hierarchisch gegliederten Aufgaben (A) umsetzt.

2. Verfahren nach Anspruch 1,
mit den weiteren Verfahrensschritten:
- Empfangen (S4) von Prozessdaten, wobei die Prozessdaten einen Istzustand des technischen Prozesses (P) umfassen, und
- Generieren (S5) einer zweiten Aktionssequenz (AS2) anhand der Prozessdaten, wobei die zweite Aktionssequenz (AS2) die hierarchisch gegliederten Aufgaben (A) umsetzt.

3. Verfahren nach Anspruch 2,
wobei die zweite Aktionssequenz (AS2) die erste Aktionssequenz (AS1) ersetzt.

4. Verfahren nach Anspruch 2,
wobei die zweite Aktionssequenz (AS2) der erste Aktionssequenz (AS1) zeitlich folgt.

5. Verfahren nach Anspruch 2,
wobei die zweite Aktionssequenz (AS2) den technischen Prozess (P) stoppt.

6. Verfahren nach einem der vorhergehenden Ansprüche,
wobei der technische Prozess (P) als:
- ein Produktionsprozess und/oder
- ein Fertigungsprozess und/oder
- ein Designprozess und/oder
- ein Logistikprozess und/oder
- ein Verkehrsleitprozess und/oder
- ein Transportprozess und/oder
- ein Planungsprozess und/oder
- ein Simulationsprozess und/oder
- ein Perzeptionsprozess
ausgebildet ist.

7. Verfahren nach einem der vorhergehenden Ansprüche,
wobei die Abhängigkeitsangaben die hierarchisch gegliederten Aufgaben (A) hinsichtlich:
- prozessualer Abfolge und/oder
- kausaler Abhängigkeiten und/oder
- Interaktionsbeziehungen und/oder
- temporaler Informationen und/oder
- benötigter Ressourcen und/oder
- obligatorisch zeitgleich verlaufender Aufgaben und/oder
- benötigter Werkzeuge
spezifizieren.

8. Verfahren nach einem der vorhergehenden Ansprüche,
wobei die Abhängigkeitsangaben Abhängigkeiten, welche bei einer Ausführung der hierarchisch gegliederten Aufgaben (A) auftreten, angeben.

9. Verfahren nach einem der vorhergehenden Ansprüche,
wobei die hierarchisch gegliederten Aufgaben (A) je eine Hierarchieangabe (HA) aufweisen,
wobei die je eine Hierarchieangabe (HA) ein hierarchisches Level innerhalb des Prozesses derart bestimmt, dass eine erste Aufgabe (A1) eines ersten hierarchischen Levels (HL1) durch mindestens eine zweite Aufgabe (A2a, A2b, A2c) eines zweiten hierarchischen Levels (HL2) weiter detailliert wird, wobei die erste Aufgabe (A1) und die zweite Aufgabe (A2) Teil der hierarchisch gegliederten Aufgaben (A) sind.

10. Verfahren nach einem der vorhergehenden Ansprüche,
mit den weiteren Verfahrensschritten:
- Empfangen (S6) einer Benutzereingabe und
- Generieren (S7) einer dritten Aktionssequenz (AS3) anhand der Benutzereingabe.

11. Verfahren nach Anspruch 10,
wobei:
- die dritte Aktionssequenz (AS3) die erste Aktionssequenz (AS1) und/oder die zweite Aktionssequenz (AS2) ersetzt oder
- die dritte Aktionssequenz (AS3) der erste Aktionssequenz (AS1) und/oder die zweite Aktionssequenz (AS2) zeitlich folgt oder
- die dritte Aktionssequenz (AS3) den technischen Prozess (P) stoppt.

12. Verfahren nach einem der vorhergehenden Ansprüche,
wobei die Parallelisierungsoptionen Angaben zu einer temporalen Parallelisierung der hierarchisch gegliederten Aufgaben (A) bereitstellen.

13. Computerprogrammprodukt, umfassend ein Computerprogramm, wobei das Computerprogramm in eine Speichereinrichtung einer Recheneinheit ladbar ist, wobei mit dem Computerprogramm die Schritte eines Verfahrens nach einem der Ansprüche 1 bis 12 ausgeführt werden, wenn das Computerprogramm auf der Recheneinheit ausgeführt wird.

14. Computerlesbares Medium, auf welchem ein Computerprogramm gespeichert ist, wobei das Computerprogramm in eine Speichereinrichtung einer Recheneinheit ladbar ist, wobei mit dem Computerprogramm die Schritte eines Verfahrens nach einem der Ansprüche 1 bis 12 ausgeführt werden, wenn das Computerprogramm auf der Recheneinheit ausgeführt wird.
